# EUROPÄISCHE PATENTSCHRIFT

(11) **EP 2 513 213 B1**
(45) Veröffentlichungstag und Bekanntmachung des Hinweises auf die Patenterteilung: **01.07.2015**
(21) Anmeldenummer: 10787488.5
(22) Anmeldetag: 09.12.2010
(51) Int. Cl.: C08K 3/00, C08K 3/22, C08K 5/5313, C08L 33/12

(54) **POLYMER-ZUSAMMENSETZUNG MIT WÄRME-ABSORBIERENDEN EIGENSCHAFTEN UND HOHER STABILITÄT**
POLYMER COMPOSITION HAVING HEAT-ABSORBING PROPERTIES AND HIGH STABILITY
COMPOSITION POLYMÈRE À PROPRIÉTÉS D'ABSORPTION THERMIQUE ET DE HAUTE STABILITÉ

(30) Priorität: 15.12.2009 DE 102009058200
(43) Veröffentlichungstag der Anmeldung: 24.10.2012
(73) Patentinhaber: Bayer Intellectual Property GmbH, 40789 Monheim (DE)
(72) Erfinder: MEYER, Alexander, 40489 Düsseldorf (DE); WEHRMANN, Rolf, 47800 Krefeld (DE); BOUMANS, Anke, 47574 Goch (DE); ERKELENZ, Michael, 47239 Duisburg (DE)
(74) Vertreter: BIP Patents
(86) Internationale Anmeldenummer: PCT/EP2010/069317
(87) Internationale Veröffentlichungsnummer: WO 2011/082940

(56) Entgegenhaltungen:
- EP-A1- 1 266 931
- EP-A1- 1 559 743
- EP-A1- 1 724 110

## Beschreibung

Die Erfindung betrifft eine Wärme-absorbierende Polymer-Zusammensetzung enthaltend einen transparenten thermoplastischen Kunststoff, Cäsiumwalframat als anorganischen Infrarotabsorber mit einem Stabilisator auf Phosphinbasis; sowie die Herstellung und Verwendung der erfindungsgemäßen Polymer-Zusammensetzungen und die daraus hergestellten Erzeugnisse. Insbesondere betrifft die vorliegende Erfindung die Verwendung der erfindungsgemäßen Polymer-Zusammensetzung enthaltend diese stabiliserten anorganischen IR-Absorber zur Herstellung von Scheiben für den Einsatz in Gebäuden, Kraftfahrzeugen und Schienen- oder Luftfahrzeugen.

Verscheibungen aus Zusammensetzungen, enthaltend transparente thermoplastische Polymere wie z.B. Polycarbonat, bieten für den Fahrzeugbereich und für Gebäude viele Vorteile gegenüber herkömmlichen Verscheibungen aus Glas. Hierzu zählen z.B. erhöhte Bruchsicherheit oder Gewichtsersparnis, die im Fall von Automobilverscheibungen eine höhere Insassensicherheit bei Verkehrsunfällen und einen niedrigeren Kraftstoffverbrauch ermöglichen. Schließlich lassen transparente Werkstoffe, die transparente thermoplastische Polymere enthalten, aufgrund der einfacheren Formbarkeit eine wesentlich größere Designfreiheit zu.

Nachteilig ist allerdings, daß die hohe Wärmedurchlässigkeit (d.h. Durchlässigkeit für IR-Strahlung) von transparenten thermoplastischen Polymeren bei Sonneneinwirkung zu einer unerwünschten Erwärmung im Inneren von Fahrzeugen und Gebäuden führt. Die erhöhten Temperaturen im Innenraum vermindern den Komfort für die Insassen bzw. Bewohner und können erhöhte Anforderungen an die Klimatisierung nach sich ziehen, die wiederum den Energieverbrauch steigern und so die positiven Effekte wieder aufheben. Um dennoch der Forderung nach einem geringen Energieverbrauch verbunden mit einem hohen Insassenkomfort Rechnung zu tragen, sind Scheiben erforderlich, die mit einem entsprechenden Wärmeschutz ausgerüstet sind. Dies gilt insbesondere für den Automobilbereich.

Wie seit langem bekannt ist, entfällt der größte Teil der solaren Energie neben dem sichtbaren Bereich des Lichts zwischen 400 nm und 750 nm auf den Bereich des nahen Infrarots (NIR) zwischen 750 nm und 2500 nm. Eindringende Sonnenstrahlung wird z.B. im Inneren eines Automobils absorbiert und als langwellige Wärmestrahlung mit einer Wellenlänge von 5 µm bis 15 µm emittiert. Da in diesem Bereich übliche Verscheibungsmaterialien -insbesondere im sichtbaren Bereich transparente thermoplastische Polymere - nicht transparent sind, kann die Wärmestrahlung nicht nach außen abstrahlen. Man erhält einen Treibhauseffekt und der Innenraum heizt sich auf. Um diesen Effekt möglichst klein zu halten, sollte daher die Transmission der Verscheibungen im NIR möglichst minimiert werden. Übliche transparente thermoplastische Polymere wie z.B. Polycarbonat sind jedoch sowohl im sichtbaren Bereich, als auch im NIR transparent.

Es werden daher z.B. Zusätze benötigt, welche im NIR eine möglichst geringe Transparenz aufweisen ohne die Transparenz im sichtbaren Bereich des Spektrums nachteilig zu beeinflussen.

Unter den transparenten thermoplastischen Kunststoffen sind Polymere basierend auf Polymethylmethacrylat (PMMA) und Polycarbonat besonders gut für die Verwendung als Verscheibungsmaterial geeignet. Aufgrund der hohen Zähigkeit besitzt insbesondere Polycarbonat ein sehr gutes Eigenschaftsprofil für derartige Einsatzzwecke.

Um diesen Kunststoffen Wärme-absorbierende Eigenschaften zu verleihen werden daher entsprechende Infrarotabsorber als Additive eingesetzt. Insbesondere sind hierfür IR-Absorber-Systeme interessant, die über ein breites Absorptionsspektrum im NIR-Bereich (Nahes Infrarot, 750 nm - 2500 nm) bei gleichzeitig geringer Absorption im sichtbaren Bereich (geringe Eigenfarbe) verfügen. Die entsprechenden Polymer-Zusammensetzungen sollen darüber hinaus eine hohe Thermostabilität sowie eine ausgezeichnete Lichtstabilität aufweisen.

Es ist eine Vielzahl von IR-Absorbern auf Basis organischer oder anorganischer Materialien bekannt, die in transparenten Thermoplasten eingesetzt werden können. Eine Auswahl derartiger Materialien ist z.B. in J. Fabian, H. Nakazumi, H. Matsuoka, Chem. Rev. 92, 1197 (1992), in US-A 5,712,332 oder JP-A 06240146 beschrieben.

IR-absobierende Additive auf Basis organischer Materialien haben allerdings häufig den Nachteil, dass sie eine geringe Stabilität gegenüber thermischer Belastung oder Bestrahlung aufweisen. So sind viele dieser Additive nicht genügend wärmestabil, um in transparente Thermoplaste eingearbeitet zu werden, da bei Ihrer Verarbeitung Temperaturen bis zu 330°C erforderlich sind. Darüber hinaus sind die Verscheibungen im Gebrauch oft über längere Zeiträume Temperaturen von mehr als 50°C, bedingt durch die Sonneneinstrahlung, ausgesetzt, was zur Zersetzung oder zum Abbau der organischen Absorbentien führen kann.

Ferner weisen die organischen IR-Absorber häufig nicht eine genügend breite Absorptionsbande im NIR-Bereich auf, so dass ihr Einsatz als IR-Absorber in Verscheibungsmaterialien ineffizient ist, wobei zusätzlich oft noch eine starke Eigenfarbe dieser Systeme auftritt, die in der Regel unerwünscht ist.

IR-absorbierende Additive auf Basis anorganischer Materialien sind im Vergleich zu organischen Additiven häufig deutlich stabiler. Auch ist der Einsatz dieser Systeme oft ökonomischer, da sie in den meisten Fällen ein deutlich günstigeres Preis/Leistungsverhältnis aufweisen. So haben Materialien auf Basis feinteiliger Boride, wie z.B. Lanthanhexaborid, sich als effiziente IR-Absorber erwiesen, da sie über eine breite Absorptionsbande verbunden mit einer hohen Thermostabilität verfügen. Derartige Boride auf Basis von La, Ce, Pr, Nd, Tb, Dy, Ho, Y, Sm, Eu, ER, Tm, Yb, Lu, Sr, Ti, Zr, Hf, V, Ta, Cr, Mo, W und Ca sind z.B. in DE 103 92 543 T5 oder EP 1 559 743 A1 beschrieben.

Ein Nachteil dieser Additive ist allerdings ihre signifikante Eigenfarbe. Die Borid-haltigen Additive verleihen dem transparenten Kunststoff nach Einarbeitung eine charakteristische grüne Färbung, die häufig unerwünscht ist, da sie den Spielraum für eine neutrale Farbgebung stark einschränkt.

Zur Kompensation der Eigenfarbe werden oft größere Mengen weiterer Farbmittel eingesetzt, was jedoch die optischen Eigenschaften der Zusammensetzung beeinträchtigt und zu einer deutlich verringerten Transmission im sichtbaren Bereich führt. Dies ist insbesondere bei Fahrzeugverscheibungen unerwünscht oder in speziellen Fällen, in denen die Sicht des Fahrers nicht beeinträchtigt werden darf, unzulässig.

Ferner sind IR-absorbierende Additive aus der Gruppe der Wolframverbindungen bekannt, die über eine im Vergleich zu den aus dem Stand der Technik bekannten anorganischen IR-Absorbern auf Borid-Basis geringere Eigenabsorption im sichtbaren Spektralbereich verfügen.

Die Herstellung und der Einsatz dieser Stoffe in thermoplastischen Materialien werden beispielsweise in H. Takeda, K. Adachi, J. Am. Ceram. Soc. 90, 4059 - 4061, (2007), WO 2005/037932 A1, JP 2006219662 A, JP 2008024902 A, JP 2008150548 A, WO 2009/059901 A2 und JP 2008214596 A beschrieben. Als nachteilig stellte sich jedoch die mangelnde Langzeitstabilität gegenüber thermischer Belastung heraus. Während die thermische Instabilität von Wolframoxiden an sich bekannt ist und beispielsweise in Romanyuk et al.; J. Phys. Chem. C 2008, 112, 11090 - 11092 beschrieben wurde, zeigte sich auch bei der Einarbeitung dieser Verbindungen in eine Polymermatrix, dass bei Thermolagerung bei erhöhter Temperatur der entsprechenden Polymer-Zusammensetzungen, wie z.B. bei einer Polycarbonat-Zusammensetzung, die Absorption im IR-Bereich signifikant nachlässt.

Für eine Anwendung der Zusammensetzungen im Glazing-Bereich, insbesondere für Autoverscheibungen, ist es jedoch unbedingt erforderlich, dass die entsprechenden IR-absorbierenden Polymerzusammensetzungen eine Langzeitstabilität gegen höhere Temperaturen aufweisen. Mit höheren Temperaturen sind z.B. Temperaturen gemeint, die ein Artikel aus Polycarbonat bei intensiver Sonneneinstrahlung annehmen kann (z.B. 50°C - 110°C). Ferner muss gewährleistet sein, dass sich die Zusammensetzungen unter herkömmlichen Prozessbedingungen verarbeiten lassen, ohne dass schon hierdurch die IR-absorbierenden Eigenschaften vermindert werden.

Darüber hinaus war bekannt, in thermoplastischen Materialien zur Verbesserung der Verarbeitungseigenschaften Thermostabilisatoren wie beispielsweise Phosphite, gehinderte Phenole, aromatische, aliphatische oder aliphatisch-aromatische Phosphine, Lactone, Thioether und gehinderte Amine (HALS, Hindered Amine Light Stabilizers) zu verwenden.

Aus der WO-A 01/18101 sind Formmassen enthaltend einen thermoplastischen Kunststoff und einen Phthalo- oder Naphthalocyanin-Farbstoff bekannt, die zur Verbesserung der Verarbeitungsstabilität Antioxidantien wie Phosphite, gehinderte Phenole, aromatische, aliphatische oder gemischte Phosphine, Lactone, Thioether und gehinderte Amine enthalten können. Im Gegensatz dazu betrifft die vorliegende Erfindung Zusammensetzungen enthaltend anorganische IR-Absorber auf Wolfram-Basis.

Aus EP 1266931 A1 sind organische IR-Absorber in Polycarbonatzusammensetzungen in Kombination mit Phosphinen bekannt. Ein Hinweis auf die Kombination anorganischer IR-Absorber, insbesondere anorganischer IR-Absorber auf Wolfram-Basis, mit Phosphinen zur Stabilisierung der Absorber in einer thermoplastischen Matrix wird in EP 1266931 A1 jedoch nicht beschrieben.

In EP 1559743 A1 werden Polycarbonatzusammensetzungen enthaltend anorganische IR-Absorber auf Basis von Boriden in Kombination mit Thermostabilisatoren wie Phosphoniten und Phosphinen beschrieben, wobei diese Additive zur Stabilisierung der Polycarbonatmatrix dienen. Wolframbasierte Zusammensetzungen werden nicht beschrieben. Es ist nicht bekannt, dass die oben genannten Stabilisatoren einen Einfluss auf anorganische IR-Absorber aufweisen.

Die US 2006/0251996 A1 offenbart mehrschichtige Platten enthaltend eine Kernschicht enthaltend ein thermoplastisches Polymer und ein IR absorbierendes Additiv, wobei das IR absorbierende Additiv ein Metalloxid ist. Darüber hinaus kann die Kernschicht zusätzlich Thermostabilisatoren enthalten. Eine Polymerzusammensetzung mit einem durch Phosphin stabilisiertem IR-Absorber gemäß der vorliegendenden Erfindung sowie mit Phosphinen stabilisierte Masterbatche werden jedoch in US 2006/0251996 A1 nicht beschrieben. Insbesondere beschreibt die US 2006/0251996 A1 auch nicht die Verwendung eines in ein Dispergiermittel eingebetteten nanoskaligen IR-Absorbers.

Bei allen bislang publizierten thermoplastischen Zusammensetzungen mit IR-Absorbern dient der Thermostabilisator aber ausschließlich zur Stabilisierung der jeweiligen Polymermatrixinsbesondere bei der Verarbeitung. So lässt sich durch Einsatz dieser Systeme die Gelbfärbung des Polycarbonats nach Belichtung, wie in EP 1266931 A1 beschrieben, begrenzen.

Es bestand daher die Aufgabe IR-absorbierende Systeme mit niedriger Eigenfarbe sowie gleichzeitig hoher Thermostabilität und Stabilität gegen Belichtung zu finden und entsprechende Zusammensetzungen mit thermoplastischen Materialien zur Verfügung zu stellen. Diese Additive sollen gleichzeitig über eine breite Absorptionscharakteristik im NIR-Bereich verfügen, während sie ein ökonomisch vertretbares oder sogar interessantes Preis/Leistungsverhältnis aufweisen. Eine weitere Aufgabe der vorliegenden Erfindung war es, Stabilisatoren bereitzustellen, die die Langzeitstabilität bekannter IR-Absorber deutlich verbessern, sowie die Bereitstellung von Zusammensetzungen mit IR-Absorber und Stabilisator in hoher Konzentration in einem thermoplastischen Polymer als Masterbatch zur weiteren Verarbeitung.

Überraschenderweise zeigte sich, dass bestimmte Stabilisatoren die Thermostabilität von IR-absorbierenden Wolframaten, insbesondere die von Cäsiumwolframat verbessern, so daß die Aufgabe der vorliegenden Erfindung durch Zusammensetzungen mit Cäsiumwolframat als IR-absorbierendem Additiv, die über eine im Vergleich zu den aus dem Stand der Technik bekannten anorganischen IR-Absorbern auf Borid-Basis geringere Eigenabsorption im sichtbaren Spektralbereich verfügen und zu thermoplastischen Materialien mit geringerer Eigenfarbe führen, gelöst wird, in denen die anorganischen IR-Absorber für eine höhere Langzeitstabilität gegenüber thermischer Belastung mit einem Stabilisator aus der Gruppe der Phosphine stabilisiert sind.

Bei den erfindungsgemäßen Cäsiumwolframat handelt es sich um Substanzen vom Typ
b2) MxWyOz (M = Cs; x/y = 0,001-1,000; z/y = 2,2-3,0). Besonders bevorzugt ist Cs_{0,33} WO₃.

In einer besonderen Ausführungsform der vorliegenden Erfindung ist die alleinige Verwendung von Cs_{0,33}WO₃ als anorganischem IR Absorber ganz besonders bevorzugt. Ebenfalls bekannt sind Verbindungen mit Cs/W-Verhältnissen von 0,20 und 0,25.

Weiterhin überraschend stellte sich dabei heraus, dass nur eine bestimmte Gruppe von Stabilisatoren wirksam ist, wohingegen andere, ähnlich aufgebaute Stabilisatoren entweder wirkungslos oder sogar schädlich sind und die Abnahme der IR-Absorption noch beschleunigen. Im Rahmen der vorliegenden Erfindung konnte so gezeigt werden, dass sich Phosphor-basierte Stabilisatoren in Form ihrer Phosphine als positiv erweisen und die IR-absorbierenden Cäsiumwolframate stabilisieren, wohingegen die alleinige Verwendung Phosphor-haltiger Stabilisatoren vom Typ der Phosphite, Phosphonate oder Phosphoniten sich als kaum wirksam bis wirkungslos erweist. Bei der Verwendung von Phosphaten, Phosphorsäure, Phosphorsäurederivaten oder entsprechenden Stabilisatoren, die diese Verbindungen beinhalten oder bilden können, kommt es sogar zu einer schnelleren Schädigung der erfindungsgemäßen Wolframate.

Phosphine im Sinne der vorliegenden Erfindung leiten sich von Verbindungen des allgemeinen Typs PₙHₙ₊₂, insbesondere von PH₃ ab, wobei bevorzugt alle Wasserstoffatome gegen aliphatische und/oder aromatische Kohlenwasserstoffreste ersetzt sind, wobei die aromatischen Kohlenwasserstoffreste weitere Substituenten wie zum Beispiel Alkylgruppen aufweisen können.. Die Phosphine können hierbei ein Phosphor-Atom aufweisen oder aber mehrere, über entsprechende aliphatische und/oder aromatische Kohlenwasserstoffe verbrückte Phosphor-Atome.

Unter Phosphiten im Sinne der vorliegenden Erfindung sollen Ester der Phosphonsäure (oft auch als Phosphorigsäureester bezeichnet) mit der allgemeinen Strukur P(OR)₃ verstanden sein, wobei R für aliphatische und/oder aromatische Kohlenwasserstoffreste steht, wobei die aromatischen Kohlenwasserstoffreste weitere Substituenten wie zum Beispiel Alkylgruppen aufweisen können.

Unter Phosphonaten sollen von der Grundstuktur R-PO(OH)₂ abgeleitet Verbindungen verstanden sein, wobei R für aliphatische und/oder aromatische Kohlenwasserstoffreste steht, wobei die aromatischen Kohlenwasserstoffreste weitere Substituenten wie zum Beispiel Alkylgruppen aufweisen können.. Die OH-Gruppen der Grundstruktur können teilweise oder vollständig zu OR-Funktionalitäten, wobei R wiederum für aliphatische und/oder aromatische Kohlenwasserstoffreste steht, wobei die aromatischen Kohlenwasserstoffreste weitere Substituenten wie zum Beispiel Alkylgruppen aufweisen können, verestert oder teilweise oder vollständig deprotoniert sein, wobei die negative Gesamtladung durch ein entsprechendes Gegenion ausgeglichen wird.

Unter Phosphoniten im Sinne der vorliegenden Erfindung sollen Ester, insbesondere Diester der Phosphonigen Säure vom Typ R-P(OR)₂ verstanden sein, wobei R für aliphatische und/oder aromatische Kohlenwasserstoffreste steht, wobei die aromatischen Kohlenwasserstoffreste weitere Substituenten wie zum Beispiel Alkylgruppen aufweisen können. Die Phosphonite können hierbei ein Phosphor-Atom aufweisen oder aber mehrere, über entsprechende aliphatische und/oder aromatische Kohlenwasserstoffe verbrückte Phosphor-Atome.

Im Rahmen der vorliegenden Erfindungen sollen unter Phosphaten Salze, Teil- bzw. Vollester und Kondensate der Phosphorsäure (H₃PO₄) verstanden sein.

Die Aufgabe der vorliegenden Erfindung wird somit durch eine Polymerzusammensetzung gelöst, die
a) einen transparenten thermoplastischen Kunststoff, bevorzugt Polycarbonat, Polystyrol, aromatische Polyester, wie Polyethylenterephthalat (PET), PET-Cyclohexandimethanol-Copolymer (PETG), Polybutylenterephthalat (PBT), cyclisches Polyolefin oder Polymethylmethacrylat, weiter bevorzugt Polycarbonat, aromatische Polyester oder Polymethacrylat, und besonders bevorzugt Polycarbonat oder Mischungen der genannten Komponenten,
b) mindestens einen anorganischer Cäsiumwolframat-IR Absorber,
c) mindestens eine Phosphinverbindung enthält, vorzugsweise Triphenylphosphin (TPP), Trialkylphenylphosphin, Trinaphthylphosphin oder Bisdiphenylphosphinoethan, wobei Triphenylphosphin (TPP) besonders bevorzugt ist.

Wie der Stand der Technik zeigt, ist die stabilisierende Wirkung von Phosphinen auf anorganische IR-Absorber unbekannt und es war daher höchst überraschend, dass sich die IR-Leistung dieser Systeme durch bestimmte Phosphin-basierte Stabilisatoren langfristig verbessern lässt.

Das der vorliegenden Erfindung zugrunde liegende Problem der Stabilisierung von Wolframaten als anorganischer IR-Stabilisator in Polymerzusammensetzungen wird weiterhin durch die Verwendung von Phosphinverbindungen zur Stabilisierung, insbesondere zur Langzeitstabilisierung, der Wolframate gelöst.

Gegenstand der Erfindung ist ferner ein Verfahren zur Herstellung der erfindungsgemäßen Zusammensetzungen sowie deren Verwendung und daraus hergestellte Erzeugnisse.

Der Partikeldurchmesser der erfindungsgemäßen Cäsiumwolframate ist vorzugsweise kleiner als 200 nm, besonders bevorzugt kleiner als 100 nm. Die Partikel sind im sichtbaren Bereich des Spektrums durchlässig, wobei durchlässig bedeutet, dass die Absorption dieser IR-Absorber im sichtbaren Bereich des Lichts verglichen mit der Absorption im IR-Bereich gering ist und der IR-Absorber zu keiner deutlich erhöhten Trübung oder deutlichen Verminderung der Transmission (im sichtbaren Bereich des Lichts) der Zusammensetzung oder desjeweiligen Endprodukts führt.

Die Wolframate vom Typ b2) weisen eine amorphe, eine kubische, tetragonale oder hexagonale Wolfram-Bronze Struktur auf, wobei M für Cs steht.

Zur Herstellung derartiger Materialien werden z.B. Wolframtrioxid, Wolframdioxid, ein Hydrat eines Wolframoxids, Wolframhexachlorid, Ammoniumwolframat oder Wolframsäure und gegebenenfalls weitere Salze enthaltend das Element M, wie z.B. Cäsiumcarbonat, in bestimmten stöchiometrischen Verhältnisse gemischt, so dass die molaren Verhältnisse der einzelnen Komponenten durch die Formel MxWyOz wiedergegeben werden. Diese Mischung wird anschließend bei Temperaturen zwischen 100 °C und 850 °C in einer reduzierenden Atmosphäre, z.B. einer Argon-Wasserstoff-Atmosphäre, behandelt und abschließend das erhaltene Pulver bei Temperaturen zwischen 550 °C und 1200 °C unter Inertgasatmosphäre getempert.

Zur Herstellung der erfindungsgemäßen anorganischen IR-Absorber-Nanopartikel kann der IR-Absorber mit den unten beschriebenen Dispergiermitteln und weiteren organischen Lösemitteln, wie z.B. Toluol, Benzol oder ähnlichen aromatischen Kohlenwasserstoffen vermischt und in geeigneten Mühlen, wie z.B. Kugelmühlen, unter Zugabe von Zirkoniumoxid (z.B. mit einem Durchmesser von 0,3 mm) gemahlen werden, um die gewünschte Partikelgrößenverteilung herzustellen. Man erhält die Nanopartikel in Form einer Dispersion. Nach Mahlung können gegebenenfalls weitere Dispergiermittel zugesetzt werden. Das Lösungsmittel wird bei erhöhten Temperaturen und reduziertem Druck entfernt. Bevorzugt sind Nanopartikel, die eine mittlere Größe kleiner als 200 nm, besonders bevorzugt kleiner als 100 nm, aufweisen.

Die Größe der Partikel kann mit Hilfe der Transmissionselektronenspektroskopie (TEM) bestimmt werden. Derartige Messungen an IR-Absorber-Nanopartikeln sind z.B. in Adachi et al., J. Am. Ceram. Soc. 2008, 91, 2897-2902, beschrieben.

Die Herstellung der erfindungsgemäßen Wolframate ist z.B. in EP 1 801 815 A1 genauer beschrieben und sie sind kommerziell z.B. bei der Firma Sumitomo Metal Mining Co., Ltd. (Japan) unter der Bezeichnung YMDS 874 erhältlich.

Für den Einsatz in transparenten Thermoplasten werden die so erhaltenen Partikel in einer organischen Matrix dispergiert, z.B. in einem Acrylat, und ggf. wie oben beschrieben in einer Mühle unter Verwendung geeigneter Hilfsstoffe wie z.B. Zirkoniumdioxid und ggf. unter Verwendung von organischen Lösungsmitteln wie zum Beispiel Toluol, Benzol oder ähnlichen Kohlenwasserstoffen gemahlen.

Geeignete Polymer-basierte Dispergiermittel sind vor allem Dispergiermittel, die eine hohe Lichttransmission aufweisen, wie z.B. Polyacrylate, Polyurethane, Polyether, Polyester oder Polyesterurethane sowie davon abgeleitete Polymere.

Als Dispergiermittel bevorzugt sind Polyacrylate, Polyether und Polyester-basierte Polymere, wobei als hochtemperaturstabile Dispergiermittel Polyacrylate wie z.B. Polymethylmethacrylat und Polyester besonders bevorzugt sind. Es können auch Mischungen dieser Polymere oder auch Copolymere auf Acrylat-basis eingesetzt werden. Derartige Dispergierhilfsmittel und Methoden zur Herstellung von Wolframatdispersionen sind z.B. in der JP 2008214596 sowie in Adachi et al. J. Am Ceram. Soc. 2007, 90 4059- 4061, beschrieben.

Für die vorliegende Erfindung geeignete Dispergiermittel sind kommerziell erhältlich. Insbesondere sind Dispergiermittel auf Polyacrylat-Basis geeignet. Derart geeignete Dispergiermittel sind z.B. unter den Handelsnamen EFKA^{®}, z.B. EFKA^{®} 4500 und EFKA^{®} 4530 bei Ciba Specialty Chemicals erhältlich. Polyesterhaltige Dispergiermittel sind ebenfalls geeignet. Sie sind beispielsweise unter den Handelsnamen Solsperse^{®}, z.B. Solsperse^{®} 22000, 24000SC, 26000, 27000 von Avecia erhältlich. Ferner sind polyetherhaltige Dispergiermittel z.B. unter den Handelsnamen Disparlon^{®} DA234 und DA325 der Firma Kusumoto Chemicals bekannt. Auch Polyurethan basierte Systeme sind geeignet. Polyurethan-basierte Systeme sind unter dem Handelsnamen EFKA^{®} 4046, EFKA^{®} 4047 von Ciba Specialty Chemicals erhältlich. Texaphor^{®} P60 und P63 sind entsprechende Handelsnamen der Cognis.

Die Menge des IR-Absorbers im Dispergiermittel beträgt 0,2 Gew.-% bis 50,0 Gew-%, bevorzugt 1,0 Gew.% - 40,0 Gew-%, weiter bevorzugt 5 Gew-% - 35 Gew-%, und am stärksten bevorzugt 10 Gew-% - 30 Gew-% bezogen auf die erfindungsgemäß eingesetzte Dispersion des anorganischen IR-Absorbers. In der Gesamtzusammensetzung der gebrauchsfertigen IR-Absorberformulierung können neben dem IR-Absorber-Reinstoff und dem Dispergiermittel noch weitere Hilfsstoffe wie zum Beispiel Zirkoniumdioxid sowie Restlösemittel wie zum Beispiel Toluol, Benzol oder ähnliche aromatische Kohlenwasserstoffe enthalten sein.

Hinsichtlich der Menge des erfindungsgemäßen IR-absorbierenden anorganischen Cäsiumwolframates in den erfindungsgemäßen Polymer-Zusammensetzungen liegen keinerlei Beschränkungen vor. Üblicherweise werden die Wolframate aber in einer Menge von 0,0001 Gew.-% - 10,0000 Gew.-%, bevorzugt 0,001 Gew.% - 1,000 Gew.-% und besonders bevorzugt 0,002 Gew.% - 0,100 Gew.-% berechnet als Feststoffanteil an Wolframat in der Polymer-Gesamtzusammensetzung eingesetzt.

In einer besonderen Ausführungsform der Erfindung beträgt die eingesetzte Menge des erfindungsgemäßen Cäsiumwolframats 0,009 Gew.-% - 0,020 Gew.-%, vorzugsweise 0,012 Gew.-% bis 0,018 Gew.-%, wiederum angegeben als Feststoffanteil an Wolframat in der Polymer-Gesamtzusammensetzung. Feststoffanteil an Wolframat meint in diesem Zusammenhang das Wolframat als Reinstoff und nicht eine Dispersion, Suspension oder andere Zubereitung, enthaltend den Reinstoff, wobei sich auch die folgenden Angaben für den Wolframatgehalt immer auf diesen Feststoffanteil beziehen, soweit nicht explizit anders angegeben.

Diese Konzentrationen finden vorzugsweise Anwendung für Fertigteile mit Dicken von 2 mm - 8 mm, bevorzugt 3,5 mm - 7,0 mm, und besonders bevorzugt 4 mm - 6 mm.

In einer weiteren Ausführungsform können optional neben dem erfindungsgemäßen Cäsiumwolframat als IR-Absorber zusätzlich weitere IR-Absorber verwendet werden, wobei deren Anteil bezüglich Menge und/oder Leistung in einer derartigen Mischung aber jeweils unterhalb derer der oben beschriebenen Wolframate liegt. Bei Mischungen sind hierbei Zusammensetzungen bevorzugt, die zwei bis einschließlich fünf und besonders bevorzugt zwei oder drei unterschiedliche IR-Absorber enthalten.

Der weitere IR-Absorber ist vorzugsweise ausgewählt aus der Gruppe der Boride und Zinnoxide, besonders bevorzugt LaB₆ oder Antimon dotiertes Zinnoxid oder Indiumzinnoxid enthält.

In einer alternativen Ausführungsform der vorliegenden Erfindung enthält die erfindungsgemäße Polymer-Zusammensetzung keinerlei anorganische IR-Absorber vom Typ der Metallboride wie beispielsweise Lanthanhexaborid, LaB₆.

In einer weiteren bevorzugten Ausführungsform weist der/die zusätzliche(n) IR-Absorber ein von dem eingesetzten Cäsiumwolframat unterschiedliches Absorptionsspektrum bezogen auf die Absorptionsmaxima auf, so daß ein maximaler Absorptionsbereich durch die Maxima abgedeckt wird.

Geeignete zusätzliche organische Infrarot-Absorber sind nach Stoffklassen z.B. in M. Matsuoka, Infrared Absorbing Dyes, Plenum Press, New York, 1990 beschrieben. Besonders geeignet sind Infrarot-Absorber aus den Klassen der Phthalocyanine, der Naphthalocyanine, der Metallkomplexe, der Azofarbstoffe, der Anthraquinone, der Quadratsäurederivate, der Immoniumfarbstoffe, der Perylene, der Quaterylene sowie der Polymethine. Davon sind ganz besonders Phthalocyanine und Naphthalocyanine geeignet.

Aufgrund der verbesserten Löslichkeit in Thermoplasten sind Phthalocyanine und Naphthalocyanine mit sterisch anspruchsvollen Seitengruppen vorzuziehen, wie beispielsweise Phenyl, Phenoxy, Alkylphenyl, Alkylphenoxy, tert-Butyl, (-S-Phenyl), -NH-Aryl, -NH-Alkyl und ähnliche Gruppen.

Weitere anorganische IR-Absorber sind z.B. Stoffe auf Basis von Boriden oder Nitriden wie z.B. Lanthanhexaborid.

Weiterhin können Verbindungen wie Indiumoxid, das mit 2 bis 30 Atom%, vorzugsweise mit 4 bis 12 Atom% Zinn (ITO) oder mit 10 bis 70 Atom% Fluor dotiert ist, zugesetzt werden.

Besonders bevorzugt ist die Kombination mit Zinnoxid als weiterem IR-Absorber, welches mit 2 bis 60 Atom% Antimon (ATO) oder mit 10 bis 70 Atom% Fluor dotiert ist.

Ferner ist Zinkoxid besonders geeignet, das mit 1 bis 30 Atom%, vorzugsweise mit 2 bis 10 Atom% Aluminium oder mit 2 bis 30 Atom% Indium oder mit 2 bis 30 Atom% Gallium dotiert ist.

Mischungen der oben genannten Infrarot-Absorbern sind besonders geeignet, da der Fachmann durch eine gezielte Auswahl eine Optimierung der Absorption im nahen Infrarotbereich erreichen kann.

Phosphinverbindungen im Sinne der Erfindung sind sämtliche organische Derivate von Phosphorwasserstoff (Phosphin) und Salze hiervon. Hinsichtlich der Auswahl der Phosphine liegen keine Beschränkungen vor, wobei die Phosphinverbindungen bevorzugt aus der Gruppe ausgewählt sind, die aliphatische Phosphine, aromatische Phosphine und aliphatisch-aromatische Phosphine umfasst.

Die Phosphinverbindungen können primäre, sekundäre und tertiäre Phosphine sein. Bevorzugt werden tertiäre Phosphine eingesetzt, wobei aromatische Phosphine besonders bevorzugt und tertiäre aromatische Phosphine ganz besonders bevorzugt sind.

In einer bevorzugten Ausführungsform der Erfindung werden Triphenylphosphin (TPP), Trialkylphenylphosphin, Bisdiphenylphosphino-ethan oder ein Trinaphthylphosphin, wovon Triphenylphosphin (TPP) ganz besonders bevorzugt ist, oder Mischungen dieser Phosphine eingesetzt.

Grundsätzlich können Mischungen aus verschiedenen Phosphinen eingesetzt werden.

In einer speziellen Ausführungsform der vorliegenden Erfindung werden die erfindungsgemäßen Phosphinverbindungen gemeinsam mit einem Phosphit oder einem phenolischen Antioxidans oder einer Mischung aus den beiden letztgenannten Verbindungen eingesetzt.

In einer weiteren besonderen Ausführungsform wird der erfindungemäße IR-Absorber vor der Einarbeitung in die thermoplastische Polymermatrix mit dem erfindungsgemäßen Phosphinstabilisator oder einer Mischung enthaltend eine erfindungsgemäße Phosphinverbindung gemeinsam mit einem Phosphit oder einem phenolischen Antioxidans oder einer Mischung aus den beiden letztgenannten Verbindungen vermischt.

Die Herstellung und Eigenschaften von Phosphinverbindungen sind dem Fachmann bekannt und beispielsweise in der EP-A 0 718 354 und "Ullmanns Enzyklopädie der Technischen Chemie", 4. Aufl., Bd. 18, S. 378-398 und Kirk-Othmer, 3. Aufl., Bd. 17, S. 527-534 beschrieben.

Hinsichtlich der Menge der in der Polymer-Zusammensetzung enthaltenen Phosphinverbindungen liegen keine Beschränkungen vor. Vorzugsweise werden die Phosphine in einer Menge von 0,0001 Gew.-% bis 10,0000 Gew.-%, besonders bevorzugt von 0,01 Gew.-% bis 0,20 Gew.-%, bezogen auf die Masse der Polymer-Gesamtzusammensetzung, eingesetzt. In einer besonderen Ausführungsform der vorliegenden Erfindung werden die Phosphine in einer Menge von 0,05 Gew.-% bis 0,15 Gew.-% bezogen auf die Masse der Polymer-Gesamtzusammensetzung, eingesetzt. Bei der Einsatzmenge der Phosphinverbindung ist zu berücksichtigen, dass unter bestimmten Verarbeitungsbedingungen in Abhängigkeit von Temperatur und Verweilzeit die Substanz oxidiert wird. Der oxidierte Anteil steht nicht mehr zur Stabilisierung des Cäsiumwolframats zur Verfugung. Deshalb sind die Zahl der Verarbeitungsschritte und die jeweiligen Prozessbedingungen zu berücksichtigen.

Bevorzugt liegt die Menge an nicht oxidierter Phosphinverbindung im Endprodukt bei >0,01 Gew.-%, weiter bevorzugt bei > 0,02 Gew.-%.

Durch die Verwendung der vorgenannten Phosphinstabilisatoren können die Cäsiumwolframat-IR-Absorber der vorliegenden Erfindung, insbesondere Cs_{0,33}WO₃ in der Polymermatrix langzeitstabilisiert und ein Abfall der IR-Absorption verhindert werden. Besonders bevorzugt wird hierbei Triphenylphosphin (TPP) als Stabilisator eingesetzt.

Um die thermoplastische Matrix zu stabilisieren, können weitere Phosphor-basierte Stabilisatoren eingesetzt werden, solange diese den Effekt der oben beschriebenen Stabilisierung nicht negativ beeinflussen.

Während Phosphine die IR-absorbierenden Wolframate offensichtlich stabilisieren, hat sich überraschenderweise herausgestellt, daß Phosphate, Phosphorsäure, Phosphorsäurederivate oder entsprechende Stabilisatoren, die diese Verbindungen beinhalten oder bilden können, zu einer schnelleren Schädigung der erfindungsgemäßen Wolframate und somit zu einem Abfall der IR-Absorption führen.

Geeignete zusätzliche Stabilisatoren sind Phosphite oder phenolischen Antioxidantien oder deren Mischungen, die ohne negative Auswirkungen auf die Beständigkeit der IR-Absorber in Verbindung mit den oben beschriebenen Phosphinen eingesetzt werden können. Kommerziell erhältliche geeignete Produkte sind beispielsweise Irgafos® 168 (Tris(2,4-di-tert-butyl-phenyl)-phosphit)und Irganox® 1076 (2,6-Di-tert-butyl-4-(octadecanoxycarbonylethyl)phenol), jeweils einzeln oder in Kombination.

Die Menge an optional eingesetzten Phosphiten beträgt bevorzugt 0,20 Gew.-% - 0,01 Gew.-%, insbesondere bevorzugt 0,10 Gew.-% - 0,02 Gew.-%. Die Menge an optional eingesetzten phenolischen Antioxidantien beträgt bevorzugt 0,100 Gew.-% - 0,001 Gew.-%, insbesondere bevorzugt 0,050 Gew.-% - 0,005 Gew.-%.

In einer bevorzugten Ausführungsform enthält die erfindungsgemäße Polymer-Zusammensetzung weiterhin einen Ultraviolett-Absorber. Zum Einsatz in der erfindungsgemäßen Polymer-Zusammensetzung geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, Ciba Spezialitätenchemie, Basel), 2-(2'-Hydroxy-5'-(tert.-octyl)-phenyl)-benzotriazol (Tinuvin^{®} 329, Ciba Spezialitätenchemie, Basel), 2-(2'-Hydroxy-3'-(2-butyl)-5'-(tert.butyl)-phenyl)-benzotriazol (Tinuvin^{®} 350, Ciba Spezialitätenchemie, Basel), Bis-(3-(2H-benztriazolyl)-2-hydroxy-5-tert.-octyl)methan, (Tinuvin^{®} 360, Ciba Spezialitätenchemie, Basel), (2-(4,6-diphenyl-1,3,5-triazin-2-yl)-5-(hexyloxy)-phenol (Tinuvin^{®} 1577, Ciba Spezialitätenchemie, Basel), sowie die Benzophenone 2,4-Dihydroxy-benzophenon (Chimasorb^{®} 22 , Ciba Spezialitätenchemie, Basel) und 2-Hydroxy-4-(octyloxy)-benzophenon (Chimassorb^{®} 81, Ciba, Basel), 2-Propensäure, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul^{®} 3030, BASF AG Ludwigshafen), 2-[2-hydroxy-4-(2-ethylhexyl)oxy]phenyl-4,6-di(4-phenyl)phenyl-1,3,5-triazine (CGX UVA 006, Ciba Spezialitätenchemie, Basel) oder Tetra-ethyl-2,2'-(1,4-phenylene-dimethylidene)-bismalonate (Hostavin^{®} B-Cap, Clariant AG).

Es können auch Mischungen dieser Ultraviolett-Absorber eingesetzt werden.

Hinsichtlich der Menge des in der Zusammensetzung enthaltenen Ultraviolett-Absorbers liegen keine besonderen Beschränkungen vor, solange die gewünschte Absorption von UV-Strahlung sowie eine ausreichende Transparenz des aus der Zusammensetzung hergestellten Formkörpers gewährleistet sind. Gemäß einer bevorzugten Ausführungsform der Erfindung enthält die Zusammensetzung Ultraviolett-Absorber in einer Menge von 0,05 Gew.-% bis 20,00 Gew.-%, insbesondere von 0,07 Gew.-% bis 10,00 Gew.-% und ganz besonders bevorzugt von 0,10 Gew.-% bis 1,00 Gew.-%.

Transparente thermoplastische Kunststoffe im Sinne der Erfindung sind z.B. Polymerisate von ethylenisch ungesättigten Monomeren und/oder Polykondensate von bifunktionellen reaktiven Verbindungen. Beispiele für transparente thermoplastische Polymere sind z.B. Polycarbonate oder Copolycarbonate auf Basis von Diphenolen, Poly- oder Copolyacrylate und Poly- oder Copolymethacrylate wie z.B. Poly- oder Copolymethylmethacrylate sowie Copolymere mit Styrol wie z.B. transparentes Polystyrolacrylnitril (PSAN) oder Polymere auf der Basis von Ethylen und/oder Propylen sowie aromatische Polyester wie PET, PEN oder PETG und transparente thermoplastische Polyurethane. Ferner können auch Polymere auf Basis von zyklischen Olefinen (z.B. TOPAS TM , ein Handelsprodukt der Firma Ticona), Poly- oder Copolykondensate der Terephthalsäure wie z.B. Poly- oder Copolyethylenterephthalate (PET oder CoPET) oder PETG eingemischt werden.

Auch Mischungen von mehreren transparenten thermoplastischen Polymeren sind möglich.. Bevorzugt sind Polymethylmethacrylat, aromatische Polyester, Polycarbonate oder Copolycarbonate, wobei Polycarbonat besonders bevorzugt ist.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Polycarbonate im Sinn der vorliegenden Erfindung sind sowohl Homopolycarbonate als auch Copolycarbonate; die Polycarbonate können in bekannter Weise linear oder verzweigt sein.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schliesslich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hdydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-di-methyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethyl-cyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind Phenol selbst, Alkylphenole wie Kresole, p-tert.-Butylphenol, Cumylphenol, p-n-Octylphenol, p-iso-Octylphenol, p-n-Nonylphenol und p-iso-Nonylphenol, Halogenphenole wie p-Chlorphenol, 2,4-Dichlorphenyl, p-Bromphenol und 2,4,6-Tribromphenol, 2,4,6-Trijodphenol, p-Jodphenol, sowie deren Mischungen.

Bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Bevorzugte Kettenabbrecher sind ferner die Phenole welche ein oder mehrfach mit C1 bis C30-Alkylresten, linear oder verzweigt, bevorzugt unsubstituiert oder mit tert.-Butyl substituiert sind.

Die Menge an einzusetzendem Kettenabbrecher beträgt bevorzugt 0,1 bis 5 Mol%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-pheno 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol% bis 2,00 Mol%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Fall des Umesterungsverfahrens werden die Verzweiger zusammen mit den Diphenolen eingesetzt.

Die aromatischen Polycarbonate der vorliegenden Erfindung besitzen Gewichtsmittelmolekulargewichte Mw (ermittelt durch Gelpermeationschromatographie und Eichung mit Polycarbonateichung) zwischen 5000 und 200.000, vorzugsweise zwischen 10.000 und 80.000 und besonders bevorzugt zwischen 15.000 und 40.000 (dies entspricht in etwa zwischen 12.000 und 330.000, vorzugsweise zwischen 20.000 und 135.000 und besonders bevorzugt zwischen 28.000 und 69.000 ermittelt durch Eichung mittels Polystyrolstandard)

Die erfindungsgemäßen Polymer-Zusammensetzungen können neben den erfindungsgemäßen Stabilisatoren optional noch weitere übliche Polymeradditive enthalten, wie z.B. die in EP-A 0 839 623, WO-A 96/15102, EP-A 0 500 496 oder "Plastics Additives Handbook", Hans Zweifel, 5th Edition 2000, Hanser Verlag, München) beschriebenen Antioxidantien, Entformungsmittel, Flammschutzmittel, Farbmittel, Thermostabilisatoren, UV-Stabilisatoren, oder optische Aufheller in den für die jeweiligen Thermoplasten üblichen Mengen, wobei von den genannten optional enthaltenen weiteren üblichen Polymeradditiven Farbmittel in einer speziellen Ausführungsform der Erfindung besonders bevorzugt sind.

Bevorzugt werden die weiteren Polymeradditive in Mengen von 0 Gew.-% bis zu 5 Gew.-%, weiter bevorzugt 0,1 Gew.-% bis 1 Gew.-%, jeweils bezogen auf die Menge der jeweiligen Polymer-Gesamtzusammensetzung, eingesetzt. Auch Mischungen mehrerer Zusatzstoffe sind geeignet.

In einer besonderen Ausführungsform der vorliegenden Erfindung ist die Polymerzusammensetzung frei von Phosphaten, Phosphorsäure, Phosphorsäurederivaten oder entsprechende Stabilisatoren, die diese Verbindungen beinhalten oder bilden können.

Farbmittel oder Pigmente im Sinne der vorliegenden Erfindung sind, Schwefel-haltige Pigmente wie Cadmium Red and Cadmium Gelb, Eisencyanid basierte Pigmente wie Berliner Blau, Oxid-Pigmente wie Titandioxid, Zinkoxid, rotes Eisenoxid, schwarzes Eisenoxid, Chromoxid, Titangelb, Zink-Eisen basiertes Braun, Titan-Cobalt basiertes Grün, Cobaltblau, Kupfer-Chrom basiertes Schwarz und Kupfer-Eisen basiertes Schwarz oder Chrom-basierte Pigmente wie Chromgelb, Phthalocyanin-abgeleitete Farbstoffe wie Kupfer-Phthalocyanin Blau and Kupfer Phthalocyanin Grün, kondensierte polycyclische Farbstoffe und Pigmente wie Azo-basierende (z.B. Nickel-Azogelb), Schwefel-Indigo-Farbstoffe, Perynon-basierte, Perylene-basierte, Chinacridon-abgeleitete, Dioxazin-basierte, Isoindolinon-basierte und Chinophthalon-abgeleitete Derivate, Anthrachinonbasierte, heterocyclische Systeme.

Konkrete Beispiele für Handelsprodukte sind z.B. MACROLEX^{®} Blau RR, MACROLEX^{®} Violett 3R, MACROLEX^{®} Violett B (Lanxess AG, Deutschland), Sumiplast^{®} Violett RR, Sumiplast^{®} Violett B, Sumiplast^{®} Blau OR, (Sumitomo Chemical Co., Ltd.), Diaresin^{®} Violett D, Diaresin^{®} Blau G, Diaresin^{®} Blau N (Mitsubishi Chemical Corporation), Heliogen^{®} Blau oder Heliogen^{®} Grün (BASF AG, Deutschland).

Von diesen sind Cyaninderivate, Chinolinderivate, Anthrachinonderivate, Phthalocyaninderivate bevorzugt.

Besonders geeignete Entformungsmittel für die erfindungsgemäßen Zusammensetzungen sind z.B. Pentaerythrittetrastearat (PETS) oder Glycerinmonostearat (GMS).

Methoden zur Herstellung der erfindungsgemäßen Polymer-Zusammensetzungen sind dem Fachmann bekannt.

Die Herstellung der erfindungsgemäßen Polymer-Zusammensetzungen enthaltend einen thermoplastischen Kunststoff, Cäsiumwalframat als anorganischen IR-Absorber, eine Phosphinverbindung und optional weitere übliche Polymeradditive erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die IR-Absorber, Phosphinverbindungen, Ultraviolett-Absorber und sonstigen Additive der erfindungsgemäßen Zusammensetzung durch bekannte Verfahren oder als Masterbatch eingebracht werden.

Die Verwendung von Masterbatchen ist insbesondere zum Einbringen des IR-Absorbers bevorzugt, wobei insbesondere Masterbatche auf Basis von Polycarbonat verwendet werden, in die die IR-Absorber in Form einer gebrauchsfertigen IR-Absorberformulierung enthaltend Dispergiermittel, vorzugsweise Polyacrylat-, Polyether- oder Polyester-basierte Dispergiermittel, hiervon vorzugsweise hochtemperaturstabile Dispergiermittel, wie einem Polyacrylat (Homo- oder Copolymer), wie z.B. Polymethylmethacrylat, und/oder Polyester oder deren Mischungen, weiterhin enthaltend Hilfsstoffe wie zum Beispiel Zirkoniumdioxid und ggf. Restlösemittel wie zum Beispiel Toluoyl, Benzol oder ähnliche aromatische Kohlenwasserstoffe eingetragen worden sind. Durch Verwendung dieser Masterbatche in Kombination mit den entsprechenden IR-Absorberformulierungen wird eine Agglomeration des IR-Absorbers in der Polymerzusammensetzung wirksam verhindert.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

In einer besonderen Ausführungsform wird der erfindungemäße Cäsiumwalfram-IR-Absorber vor der Einarbeitung in die thermoplastische Polymermatrix mit dem erfindungsgemäßen Phosphinstabilisator oder einer Mischung enthaltend eine erfindungsgemäße Phosphinverbindung gemeinsam mit einem Phosphit oder einem phenolischen Antioxidans oder einer Mischung aus den beiden letztgenannten Verbindungen zu einem Masterbatch vermischt, wobei die Vermischung bevorzugt in der Schmelze unter Einwirkung von Scherkräften (zum Beispiel in einem Kneter oder Zweischneckenextruder) stattfindet. Dieses Verfahren bietet den Vorteil, daß der IR-Absorber auch schon während des Compoundierens geschützt und eine Schädigung desselben vermieden wird. Zur Herstellung de Masterbatches wird als Polymermatrx bevorzugt der thermoplastische Kunststoff gewählt, der auch die Hauptkomponente der letztlichen Polymer-Gesamtzusammensetzung darstellt.

Der so hergestellte Masterbatch enthält
a. 85,00 Gew.-% - 98,89 Gew.-%, bevorzugt 93,00 Gew.-% - 98,89 Gew.-% eines transparenten thermoplastischen Kunststoffs;
b. 0,1 Gew.-% - 2,0 Gew.-% Cs_{0,33}WO₃; und
c. 1,0 Gew.-% - 4,8 Gew.-% Dispergiermittel
d. 0,01 Gew.-%- 0,20 Gew.-% eines Stabilisators auf Phosphinbasis, vorzugsweise Triphenylphosphin (TPP),
e. optional 0 - 8,0 Gew.-% mindestens eines weiteren Hilfsstoffs und/oder Additivs, wie z. B. Zirkondioxid,
wobei sich die Summe der Komponenten a-e zu 100 Gew.-% addiert.

In einer bevorzugten Ausführungsform liegt der anorganische IR-Absorber in einer Acrylat- Matrix vor. In einer weiteren bevorzugten Ausführungsform ist der transparente thermoplastische Kunststoff ein Polycarbonat. Eine weitere bevorzugte Ausführungsform sieht Triphenylphosphin (TPP) als Stabilisator vor.

Die erfindungsgemäßen Polymer-Zusammensetzungen können zu Erzeugnissen oder Formkörpern verarbeitet werden, in dem man beispielsweise die Polymer-Zusammensetzungen zunächst wie beschrieben zu Granulat extrudiert und dieses Granulat durch geeignete Verfahren zu verschiedenen Erzeugnissen oder Formkörpern in bekannter Weise verarbeitet.

Die erfindungsgemäßen Zusammensetzungen können in diesem Zusammenhang beispielsweise durch Heißpressen, Spinnen, Blasformen, Tiefziehen, Extrudieren oder Spritzgiessen in Erzeugnisse oder Formkörper, geformte Gegenstände wie Spielzeugteile, Fasern, Folien, Bändchen, Platten wie Massivplatten, Stegplatten, Doppelstegplatten oder Wellplatten, Gefäße, Rohre oder sonstige Profile, überführt werden. Von Interesse ist auch die Verwendung von Mehrschichtsystemen. Das Aufbringen kann zugleich oder unmittelbar nach der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Platten aus Basis- und optionaler Deckschicht / optionalen Deckschichten werden jedoch bevorzugt durch (Co)extrusion hergestellt.

Zur Extrusion wird die gegebenenfalls z.B. mittels Trocknung vorbehandelte Polymer-Zusammensetzung dem Extruder zugeführt und im Plastifizierungssystem des Extruders aufgeschmolzen. Die Kunststoffschmelze wird dann durch eine Breitschlitzdüse oder eine Stegplattendüse gedrückt und dabei verformt, im Walzenspalt eines Glättkalanders in die gewünschte endgültige Form gebracht und durch wechselseitige Kühlung auf Glättwalzen und in der Umgebungsluft formfixiert. Es werden die zur Extrusion der Polymer-Zusammensetzung notwendigen Temperaturen eingestellt, wobei üblicherweise den Herstellerangaben gefolgt werden kann. Enthalten die Polymerzusammensetzungen beispielsweise Polycarbonate mit hoher Schmelzeviskosität, so werden diese normalerweise bei Schmelzetemperaturen von 260 °C bis 320 °C verarbeitet, entsprechend werden die Zylindertemperaturen des Plastifizierzylinders sowie die Düsentemperaturen eingestellt.

Durch Einsatz von einem oder mehreren Seitenextrudern und einer Mehrkanal-Düse oder gegebenenfalls geeigneten Schmelzeadaptern vor einer Breitschlitzdüse lassen sich thermoplastische Schmelzen verschiedener Zusammensetzung übereinander legen und somit mehrschichtige Platten oder Folien erzeugen (für die Coextrusion siehe beispielsweise EP-A 0 110 221, EP-A 0 110 238 und EP-A 0 716 919, für Details des Adapter- und Düsenverfahrens siehe Johannaber/Ast:"Kunststoff- Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990).

Erfindungsgemäß bevorzugte Erzeugnisse oder Formkörper sind Platten, Folien, Verscheibungen, beispielsweise Autofenster, Autosonnendächer, Panoramadächer, Bedachungen oder Gebäudeverglasungen, die die erfindungsgemäßen Zusammensetzungen enthalten. Dabei können auch Doppelstegplatten oder Multistegplatten verwendet werden. Als weitere Komponenten der erfindungsgemäßen Erzeugnisse neben den erfindungsgemäßen Zusammensetzungen können beispielsweise weitere Werkstoffteile in den erfindungsgemäßen Erzeugnissen enthalten sein. Beispielsweise können Verscheibungen Dichtungsmaterialen am Rand der Verscheibungen aufweisen. Bedachungen können beispielsweise Metallkomponenten wie Schrauben, Metallstifte oder ähnliches aufweisen, die zur Befestigung oder Führung (bei Falt- oder Schiebedächern) der Bedachungselemente dienen können. Ferner können weitere Materialien mit den erfindungsgemäßen Zusammensetzungen verbunden werden, z.B. im 2-Komponenten-Spritzguss. So kann das entsprechende Bauteil mit IR-absorbierenden Eigenschaften mit einem Rand versehen werden, welcher z.B. dem Verkleben dient.

Die Artikel enthaltend die Polymer-Zusammensetzung der vorliegenden Erfindung haben Trübungswerte von weniger als 5 %, bevorzugt weniger als 4 %.

Darüber hinaus weisen die Artikel einen T_{DS} Wert von bevorzugt < 80 % auf (T_{DS}: Direct Solar Transmittance; Werte werden gemessen an optischen Farbmusterplatten mit einer Dicke von 4 mm. Die Berechnung der Gesamttransmission T_{DS} wird nach ISO 13837, computational convention "A" durchgeführt).

In einer besonderen Ausführungsform werden die Artikel aus der Zusammensetzung der vorliegenden Erfindung beschichtet. Diese Beschichtung dient dem Schutz des thermoplastischen Materials gegenüber allgemeinen Witterungseinflüssen (z.B. Schädigung durch Sonnenlicht) sowie gegenüber mechanischer Beeinträchtigung der Oberfläche (z.B. Verkratzen) und erhöht somit die Beständigkeit der entsprechend ausgerüsteten Artikel.

Es ist bekannt, dass Polycarbonat gegenüber UV-Strahlung mittels verschiedener Beschichtungen geschützt werden kann. Üblicherweise enthalten diese Beschichtungen UV-Absorber. Diese Schichten erhöhen ebenso die Kratzfestigkeit des entsprechenden Artikels. Die Artikel aus der vorliegenden Erfindung können Einschicht oder Mehrschichtsysteme tragen. Sie können ein- oder beidseitig beschichtet sein. In einer bevorzugten Ausführungsform enthält der Artikel einen Kratzfestlack enthaltend UV-Absorber.

Bei Verscheibungsmaterialien trägt der Artikel mindestens eine Kratzfest- bzw. Antireflexbeschichtung auf mindestens einer Seite.

Die Herstellung der Beschichtung, z.B. einer Anti-Reflexbeschichtung, kann über verschiedene Methoden erfolgen. Beispielsweise kann über verschiedene Methoden des Aufdampfens, z.B. über Elektronenstrahlverfahren, Widerstandserhitzung sowie über Plasmaabscheidung oder verschiedener Sputtermethoden wie Hochfrequenz-Sputtern, Magnetron-Sputtern, Ionenstrahl-Sputtern usw., Ionenplattieren mittels DC-, RF-, HCD-Methoden, Reaktiv-Ionenplattieren usw. oder chemischer Gasphasenabscheidung eine Beschichtung erfolgen. Ferner kann eine Antireflexbeschichtung auch aus Lösung aufgebracht werden. So kann über eine Dispersion eines Metalloxids mit hohen Brechungsindex wie ZrO₂, TiO₂ Sb₂O₅ oder WO₃ in einen Silicon-basierten Lack eine entsprechende Beschichtungslösung hergestellt werden, welche zur Beschichtung von Kunstoffartikeln geeignet ist und thermisch oder UV-gestützt ausgehärtet werden kann.

Es sind verschiedene Methoden bekannt, um eine Kratzfestbeschichtung auf Kunststoffartikeln herzustellen. Beispielsweise können Epoxy-, Acryl-, Polysiloxan-, kolloidales Kieselgel-, oder anorganisch/organisch (Hybridsysteme) basierte Lacke verwendet werden. Diese Systeme können über beispielsweise über Tauchverfahren, Spincoating, Sprühverfahren, oder Fließbeschichtung aufgebracht werden. Die Aushärtung kann thermisch oder mittels UV-Bestrahlung erfolgen. Es können Ein- oder Mehrschichtsysteme verwendet werden. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, vorhanden sein. Ferner können IR-Absorber organischer oder anorganischer Natur enthalten sein. Diese Additive können im Kratzfestlack selbst oder in der Primerschicht enthalten sein. Die Dicke der Kratzfestschicht beträgt 1 µm, - 20 µm, bevorzugt 2 µm, - 15 µm .Unterhalb von 1 µm ist die Beständigkeit der Kratzfestschicht ungenügend. Oberhalb von 20 µm treten häufiger Risse im Lack auf. Das erfindungsgemäße Basismaterial, welches in der vorliegenden Erfindung beschrieben wird, wird bevorzugt nach Fertigstellung des Spritzgussartikels mit einer oben beschriebenen Kratzfest- und/oder Antireflexschicht versehen, da der bevorzugte Einsatzbereich im Bereich von Fenster- oder- Automobilverscheibung liegt.

Für Polycarbonate wird bevorzugt ein UV-Absorber enthaltender Primer eingesetzt, um die Haftung des Kratzfestlackes zu verbessern. Der Primer kann weitere Stabilisatoren wie z.B. HALS-Systeme (Stabilisatoren auf Basis sterisch gehinderter Amine), Haftvermittler, Fließhilfsmittel enthalten. Das jeweilige Harz kann aus einer Vielzahl von Materialien ausgewählt werden und ist z.B. in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melaminbasierte, Epoxy- und Alkyd-Systeme oder Mischungen dieser Systeme eingesetzt werden. Das Harz wird meist in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50°C und 130°C eingesetzt - häufig nach dem ein Großteil des Lösemittels kurzzeitig bei Raumtemperatur entfernt wurde. Kommerziell erhältliche Systeme sind z.B. SHP470, SHP470FT2050 und SHP401 der Firma Momentive Performance Materials. Derartige Beschichtungen sind z.B. in US 6350512 B1, US 5869185, EP 1308084, WO 2006/108520 beschrieben.

Kratzfest-Lacke (Hard-Coat) sind bevorzugt aus Siloxanen aufgebaut und enthalten bevorzugt UV-Absorber. Sie werden bevorzugt über Tauch- oder Fließverfahren aufgebracht. Die Aushärtung erfolgt bei Temperaturen von 50°C - 130°C. Kommerziell erhältliche Systeme sind z.B. AS4000, SHC5020 und AS4700 von Momentive Performance Materials. Derartige Systeme sind z.B. in US 5041313, DE 3121385, US 5391795, WO 2008/109072 beschrieben. Die Synthese dieser Materialien erfolgt meist über Kondensation von Alkoxy- und/oder Alkylakoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Anstatt von Primer / Kratzfestbeschichtungs-Kombinationen können Einkomponenten-Hybrid-Systeme eingesetzt werden Diese sind z.B. in EP0570165 oder WO 2008/071363 oder DE 2804283 beschrieben. Kommerziell erhältlich Hybrid-Systeme sind z.B. unter den Namen PHC587 oder UVHC 3000 von Momentive Performance Materials erhältlich.

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

Die Bestimmung des Schmelzvolumenrate (MVR) erfolgt nach ISO 1133 (bei 300 °C; 1,2 kg).

Bestimmung des T_{DS}-Wertes (Direct Solar Transmittance):
Die Transmissions- und Reflexionsmessungen wurden an einem Perkin Elmer Lambda 900 Spektralphotometer mit Photometerkugel durchgeführt (d.h. Bestimmung der Gesamttransmission sowohl durch Messung der diffusen und direkten Transmission als auch der diffusen und direkten Reflektion). Alle Werte wurden von 320 nm bis 2300 nm bestimmt.

Die Berechnung der Gesamttransmission T_{DS} wurde nach ISO 13837, computational convention "A" durchgeführt.

Die Thermolagerung der Proben erfolgt in einem Umluftofen. Die Thermolagerung erfolgte bei 110 °C. Aus den gemessenen Werten wurde die prozentuale Veränderung der entsprechenden Werte berechnet. Die Ergebnisse sind in Tabelle 1 dargestellt.

Zur Herstellung der Probekörper wird additivfreies Polycarbonat Makrolon 2608 (lineares Bisphenol-A Polycarbonat) der Firma Bayer MaterialScience mit einem Schmelzvolumenindex (MVR) von 12 cm³/10 min bei 300 °C und 1,2 kg Belastung gemäß ISO 1133 verwendet.

Die Compoundierung der Additive erfolgte auf einem Zweiwellenextruder der Firma KrausMaffei Berstorff TYP ZE25 bei einer Gehäusetemperatur von 260°C bzw. einer Massetemperatur von 270°C und einer Drehzahl von 100 Upm mit der in Tabelle 1 angegebenen Mengen an Additiven.

Das Granulat wird bei 120 °C für 3 Stunden im Vakuum getrocknet und anschließend auf einer Spritzgussmaschine vom Typ Arburg 370 mit einer 25-Spritzeinheit bei einer Massetemperatur von 300°C und einer Werkzeugtemperatur von 90 °C zu Farbmusterplatten mit den Abmessungen 60 mm x 40 mm x 4 mm verarbeitet.

Als IR-Absorber wird eine Cäsiumwolframat (Cs_{0,33}WO₃)-Dispersion, (YMDS 874 der Firma Sumitomo Metal Mining, Japan) eingesetzt, wobei der Feststoffgehalt an Cäsiumwolframat in der Dispersion 25 Gew.-% beträgt. Die Gewichtsangaben in den Beispielen beziehen sich auf das Cäsiumwolframat als Reinstoff.

Als Stabilisatoren zur Stabilisierung des anorganischen IR-Absorbers wurden folgende Verbindungen eingesetzt:
T1: Triphenylphosphin (TPP, Sigma-Aldrich, 82018 Taufkirchen, Deutschland)
T2: Tris(2,4-di-tert-butyl-phenyl)-phosphit (Irgafos^{®} 168 der Ciba Specialty Chemicals, Basel, Schweiz).
T3: 1,2-Bis-(diphenyphosphino)-ethan (Sigma-Aldrich, 82018 Taufkirchen, Deutschland)
T4: Tri-o-tolylphosphin (Sigma-Aldrich, 82018 Taufkirchen, Deutschland)

### Beispiel 1 (Vergleichsbeispiel)

Makrolon^{®} 2608 wird mit 0,015 Gew.-% Cäsiumwolframat, Cs_{0,33}WO₃, (entspricht 0,060 Gew.-% YMDS 874-Dispersion) wie oben beschrieben compoundiert. Die Ergebnisse der Thermolagerung sind in Tabelle 1 aufgeführt.

### Beispiel 2 (Vergleichsbeispiel)

Makrolon^{®} 2608 wird mit 0,015 Gew.-% Cäsiumwolframat, Cs_{0,33}WO₃, (entspricht 0,060 Gew.-% YMDS 874-Dispersion) sowie 0,1 Gew.-% Irgafos 168 wie oben beschrieben compoundiert. Die Ergebnisse der Thermolagerung sind in Tabelle 1 aufgeführt.

### Beispiel 3 (Erfindungsgemäß)

Makrolon^{®} 2608 wird mit 0,015 Gew.-% Cäsiumwolframat, Cs_{0,33}WO₃, (entspricht 0,060 Gew.-% YMDS 874-Dispersion) sowie 0,1 Gew.-% 1,2-Bis-(diphenyphosphino)-ethan unter oben beschriebenen Bedingungen versetzt.

### Beispiel 4 (Erfindungsgemäß)

Makrolon^{®} 2608 wird mit 0,015 Gew.-% Cäsiumwolframat, Cs_{0,33}WO₃, (entspricht 0,060 Gew.-% YMDS 874-Dispersion) sowie 0,1 Gew.-% Triphenylphosphin (TPP) wie oben beschrieben compoundiert. Die Ergebnisse der Thermolagerung sind in Tabelle 1 aufgeführt.

### Beispiel 5 (Erfindungsgemäß)

Makrolon^{®} 2608 wird mit 0,015 Gew.-% Cäsiumwolframat, Cs_{0,33}WO₃, (entspricht 0,060 Gew.-% YMDS 874-Dispersion) sowie 0,1 Gew.-% Tri-o-tolylphosphin unter oben beschriebenen Bedingungen versetzt.

**Tabelle 1: Veränderung der IR-Eigenschaften nach Thermolagerung**

| Beispiel Nr. | Eingesetzter Stabilisator | ΔT_{DS} (500 h) | ΔT_{DS} (1000 h) |
|---|---|---|---|
| 1 (Vergleich) | - | 4,6 | 5,1 |
| 2 (Vergleich) | T2 | 4,0 | 4,8 |
| 3 (Erfindgungssgemäß) | T3 | 2,3 | 2,6 |
| 4 (Erfindgungssgemäß) | T1 | 2,0 | 2,0 |
| 5 (Erfindgungssgemäß) | T4 | 2,1 | 2,6 |

**Tabelle 2: Veränderung der IR-Eigenschaften nach Thermolagerung in %**

| Beispiel Nr. | Eingesetzter Stabilisator | ΔT_{DS} (500 h) [%] | ΔT_{DS} (1000 h) [%] |
|---|---|---|---|
| 1 (Vergleich) | - | 8,5 | 9,6 |
| 2 (Vergleich) | T2 | 7,6 | 9,1 |
| 3 (Erfindungssgemäß) | T3 | 4,6 | 5,2 |
| 4 (Erfindungssgemäß) | T1 | 3,8 | 3,8 |
| 5 (Erfindungssgemäß) | T4 | 3,9 | 4,8 |

Die aus den erfindungsgemäßen Zusammensetzungen hergestellten Proben weisen eine geringere Veränderung im ΔT_{DS} verglichen mit den nicht erfindungsgemäßen Zusammensetzungen auf. Selbst nach 1000 h Thermoalterung bei 110 °C weisen die erfindungsgemäßen Zusammensetzungen gute IR-Absorptionseigenschaften auf. Überraschenderweise führt der Zusatz anderer Thermostabilisatoren, die nicht auf Phosphinbasis beruhen, zu keiner deutlichen Verbesserung in den IR-Absorptionseigenschaften (Beispiel 2). Der T_{DS}-Wert der erfindungsgemäßen Zusammensetzungen erhöht sich nach Thermolagerung deutlich weniger gegenüber dem Ausgangswert vor Thermolagerung als der der Vergleichsbeispiele, was eine bessere IR-Absorptionseigenschaft nach der Thermolagerung bedeutet.

## Patentansprüche

1. Polymer-Zusammensetzung enthaltend
a. mindestens einen transparenten thermoplastischen Kunststoff;
b. Cäsiumwolframat als anorganischen IR-Absorber und
c. mindestens einen Stabilisator auf Phosphinbasis.

2. Zusammensetzung nach Anspruch 1, **dadurch gekennzeichnet, dass** der Stabilisator ein Phosphin ist, ausgewählt aus der Gruppe der aliphatischen Phosphine, aromatischen Phosphine und aliphatisch-aromatischen Phosphine.

3. Zusammensetzung nach Anspruch 2, wobei der Stabilisator ein Phosphin ist ausgewählt aus der Gruppe, die Triphenylphosphin, Trialkylphenylphosphin, Bisdiphenylphosphino-ethan, Trinaphthylphosphin und Mischungen dieser Phosphine umfasst.

4. Zusammensetzung nach einem der vorhergehenden Ansprüche, **dadurch gekennzeichnet, dass** die Phosphinverbindung in einer Menge von 0,01 Gew.-% bis 0,20 Gew.-%, bezogen auf die Gesamtzusammensetzung, enthalten ist.

5. Zusammensetzung nach einem der vorhergehenden Ansprüche, **dadurch gekennzeichnet, dass** der Infrarotabsorber mit einem Feststoffgehalt basierend auf Wolframat in einer Menge von 0,0001 Gew.-% - 10,0000 Gew.-%, bezogen auf die Gesamtzusammensetzung, enthalten ist.

6. Zusammensetzung nach einem der vorhergehenden Ansprüche, **dadurch gekennzeichnet, dass** das transparente thermoplastische Material ausgewählt ist aus der Gruppe, die Polymethylmethacrylate, Polycarbonate und Copolycarbonate umfasst.

7. Zusammensetzung nach einem der vorhergehenden Ansprüche, **dadurch gekennzeichnet, dass** die Zusammensetzung mindestens einen weiteren IR-Absorber, vorzugsweise ausgewählt aus der Gruppe der Boride und Zinnoxide, enthält.

8. Zusammensetzung nach einem der vorhergehenden Ansprüche, **dadurch gekennzeichnet, dass** die Zusammensetzung als weiteren Bestandteil mindestens eine Verbindung aus der Gruppe der Ultraviolett-Absorber, Farbmittel, Entformer, Flammschutzmittel und Thermostabilisatoren enthält.

9. Verwendung einer Polymer-Zusammensetzung nach Anspruch 1 zur Herstellung von Automobil- und Architekturverscheibungen.

10. Verfahren zur Herstellung einer Polymer-Zusammensetzung nach Anspruch 1 bis 8, umfassend die Schritte:
a) Herstellung eines Masterbatches enthaltend
- thermoplastisches Polymer,
- ein Wolframat in Actylat-Matrix als IR-Absorber,
- einen Stabilisator auf Phosphinbasis,
b) Mischen der Bestandteile der Zusammensetzung durch einen Extruder, wobei der transparente thermoplastische Kunststoff während des Mischens aufgeschmolzen wird.

## Claims

1. Polymer composition containing
a. at least one transparent thermoplastic synthetic material;
b. caesium tungstate as inorganic IR absorber; and
c. at least one phosphine-based stabiliser.

2. Composition according to Claim 1, **characterised in that** the stabiliser is a phosphine selected from the group of the aliphatic phosphines, aromatic phosphines and aliphatic-aromatic phosphines.

3. Composition according to Claim 2, wherein the stabiliser is a phosphine selected from the group that includes triphenylphosphine, trialkylphenylphosphine, bisdiphenylphosphinoethane, trinaphthylphosphine and mixtures of these phosphines.

4. Composition according to one of the preceding claims, **characterised in that** the phosphine compound is contained in a quantity of 0.01 wt.% to 0.20 wt.%, relative to the overall composition.

5. Composition according to one of the preceding claims, **characterised in that** the infrared absorber is contained with a solids content based on tungstate in a quantity of 0.0001 wt.%-10.0000 wt.%, relative to the overall composition.

6. Composition according to one of the preceding claims, **characterised in that** the transparent thermoplastic material is selected from the group that includes polymethyl methacrylates, polycarbonates and copolycarbonates.

7. Composition according to one of the preceding claims, **characterised in that** the composition contains at least one further IR absorber, preferably selected from the group of the borides and tin oxides.

8. Composition according to one of the preceding claims, **characterised in that** the composition contains as further constituent at least one compound from the group of the ultraviolet absorbers, colouring agents, mould-release agents, flameproofing agents and heat stabilisers.

9. Use of a polymer composition according to Claim 1 for producing automobile glazings and architectural glazings.

10. Process for producing a polymer composition according to Claims 1 to 8, comprising the following steps:
a) production of a masterbatch containing
- thermoplastic polymer,
- a tungstate in acrylate matrix as IR absorber,
- a phosphine-based stabiliser,
b) mixing the constituents of the composition by means of an extruder, the transparent thermoplastic synthetic material being fused during the mixing.

## Revendications

1. Composition de polymère, contenant
a. au moins un matériau thermoplastique transparent ;
b. du tungstate de césium comme absorbant inorganique des IR et
c. au moins un stabilisant à base de phosphine.

2. Composition selon la revendication 1, **caractérisée en ce que** le stabilisant est une phosphine choisie dans le groupe contenant les phosphines aliphatiques, les phosphines aromatiques et les phosphines aliphatiques-aromatiques.

3. Composition selon la revendication 2, le stabilisant étant une phosphine choisie dans le groupe qui comprend la triphénylphosphine, la trialkylphénylphosphine, le bisdiphénylphosphinoéthane, la trinaphtylphosphine et les mélanges de ces phosphines.

4. Composition selon l'une quelconque des revendications précédentes, **caractérisée en ce que** le composé de phosphine est contenu en une quantité de 0,01% en poids à 0,20% en poids, par rapport à la composition totale.

5. Composition selon l'une quelconque des revendications précédentes, **caractérisée en ce que** l'absorbant des infrarouges présentant une teneur en solides à base de tungstène est contenu en une quantité de 0,0001% en poids à 10,0000% en poids, par rapport à la composition totale.

6. Composition selon l'une quelconque des revendications précédentes, **caractérisée en ce que** le matériau thermoplastique transparent est choisi dans le groupe qui comprend les poly(méthacrylates de méthyle), les polycarbonates et les copolycarbonates.

7. Composition selon l'une quelconque des revendications précédentes, **caractérisée en ce que** la composition contient au moins un autre absorbant des IR, de préférence choisi dans le groupe des borures et des oxydes stanniques.

8. Composition selon l'une quelconque des revendications précédentes, **caractérisée en ce que** la composition contient, comme autre constituant, au moins un composé du groupe des absorbants des ultraviolets, des colorants, des agents de démoulage, des agents ignifuges et des thermostabilisants.

9. Utilisation d'une composition de polymère selon la revendication 1, pour la fabrication de vitrages pour automobiles et architecturaux.

10. Procédé pour la préparation d'une composition de polymère selon la revendication 1 à 8, comprenant les étapes :
a) préparation d'un mélange maître contenant
- un polymère thermoplastique
- un tungstate dans une matrice d'acrylate comme absorbant des IR,
- un stabilisant à base de phosphine,
b) mélange des constituants de la composition par une extrudeuse, le matériau thermoplastique transparent étant fondu pendant le mélange.
